# EUROPÄISCHE PATENTSCHRIFT

(11) **EP 3 915 353 B1**
(45) Veröffentlichungstag und Bekanntmachung des Hinweises auf die Patenterteilung: **10.05.2023**
(21) Anmeldenummer: 21161988.7
(22) Anmeldetag: 11.03.2021
(51) Int. Cl.: A01D 41/12, A01D 41/127, A01D 43/073

(54) **VERFAHREN ZUR BESTIMMUNG DER POSITION EINER AN EINER ÜBERLADEVORRICHTUNG EINER SELBSTFAHRENDEN ERNTEMASCHINE ANGEORDNETEN KAMERA**
METHOD FOR DETERMINING THE POSITION OF A CAMERA MOUNTED ON A LOADING DEVICE OF A SELF-PROPELLED HARVESTER
PROCÉDÉ DE DÉTERMINATION DE LA POSITION D'UNE CAMÉRA AGENCÉE SUR UN CHARGEUR D'UNE MOISSONNEUSE AUTONOME

(30) Priorität: 29.05.2020 DE 102020114498
(43) Veröffentlichungstag der Anmeldung: 01.12.2021
(73) Patentinhaber: CLAAS E-Systems GmbH, 49201 Dissen (DE)
(72) Erfinder: Kirk, Kristian, 2100 Kopenhagen (DK); Kowalewski, Szymon, 2450 Kopenhagen SV (DK); Lahmann, Dirk, 33790 Halle/Westf. (DE); Völkert, Marcel, 48157 Münster (DE); Reimer, Daniel, 33818 Leopolshöhe (DE)
(74) Vertreter: CLAAS Gruppe

(56) Entgegenhaltungen:
- EP-A1- 2 301 318
- EP-A1- 2 510 775
- EP-A1- 2 873 315
- WO-A1-2013/068574

## Beschreibung

Die vorliegende Erfindung betrifft ein Verfahren zur Bestimmung der Position einer an einer Überladevorrichtung einer selbstfahrenden Erntemaschine angeordneten Kamera gemäß dem Oberbegriff des Anspruches 1. Weiterhin betrifft die Erfindung ein System zur Bestimmung der Position einer an einer Überladevorrichtung einer selbstfahrenden Erntemaschine angeordneten Kamera gemäß dem Oberbegriff des Anspruches 11.

Selbstfahrende landwirtschaftliche Erntemaschinen wie Feldhäcksler oder Mähdrescher sind mit einer Überladevorrichtung ausgestattet. Die Überladevorrichtung dient dazu, während der Erntefahrt geerntetes Gut, das die inneren Bearbeitungs- und Förderaggregate der Erntemaschine durchlaufen hat, in einen mitfahrenden Ladebehälter zu überladen. Der Ladebehälter kann sich auf einem Anhänger befinden, der wiederum von einem Transportfahrzeug (z. B. einem Traktor) gezogen wird, oder er kann Teil eines selbstfahrenden Transportfahrzeugs (z. B. eines Lastwagens) sein. Aufgrund der Funktionsweise und der Abmessungen der Überladevorrichtung wird das Überladen über eine Distanz zwischen Erntemaschine und Ladebehälter hinweg ermöglicht, welche ein sicheres, insbesondere kollisionsfreies, Begleiten der Erntemaschine erlaubt. Während des Überladens stattfindende Lenkbewegungen der Erntemaschine und/oder des Ladebehälters müssen ausgeglichen werden, um ein möglichst verlustfreies Überladen des Erntegutes zu gewährleisten. Hierzu ist an der Überladevorrichtung eine Kamera angeordnet, mittels der ein Zielbereich im Ladebehälter erfasst wird, welchem von der Erntemaschine aufgenommenes Erntegut mittels der Überladevorrichtung zugeführt werden soll. Durch die Auswertung von Bilddaten erfolgt die Ansteuerung von zumindest einem Aktor, mittels dem die Position der Überladevorrichtung und/oder des Umlenkelementes relativ zum Zielbereich im Ladebehälter anpassbar ist. Am freien Ende der Überladevorrichtung ist ein Umlenkelement angeordnet, welches den Abgabewinkel des Erntegutes beeinflusst. Die Kamera ist räumlich beabstandet zu dem Umlenkelement an der Überladevorrichtung angeordnet. Eine solche Erntemaschine ist aus der EP 2 301 318 B1 bekannt.

Um zu gewährleisten, dass die Kamera den Zielbereich korrekt erfassen kann, ist es erforderlich, dass bei der Montage der Kamera an der Überladevorrichtung ein vorgegebener Abstand zum Umlenkelement sowie eine vorgegebene Neigung eingehalten bzw. eingestellt wird. Zur Einstellung der Neigung ist an einer Haltevorrichtung, die der Befestigung der Kamera dient und zugleich ein Schwenken um eine horizontale Achse ermöglicht, eine Skale angeordnet. Anhand der Skale erfolgt die Justierung der Neigung der Kamera, um die für ein korrektes Erfassen des Zielbereiches notwendige Soll-Neigung einzustellen. Dabei kommt es zum einen auf die Sorgfalt an, mit der die Neigung nach der Montage der Kamera vorgenommen wird, und zum anderen darauf, dass die Skale korrekt an der Haltevorrichtung positioniert ist. Eine von der Soll-Neigung abweichende Ausrichtung der Kamera führt zumindest zu einer Einschränkung der Funktionalität bei der Erfassung des Zielbereiches. Damit einhergehend ist auch die Ansteuerung des zumindest einen Aktors der Überladevorrichtung und oder des Umlenkelementes nur eingeschränkt möglich, was entsprechend zu Überladeverlusten führen kann.

Es ist eine Aufgabe der vorliegenden Erfindung, ein Verfahren zur Bestimmung der Position einer an einer Überladevorrichtung einer selbstfahrenden Erntemaschine angeordneten Kamera sowie ein System zur Bestimmung der Position einer an einer Überladevorrichtung einer selbstfahrenden Erntemaschine angeordneten Kamera bereitzustellen, wodurch eine funktionale Überprüfung der Kamera hinsichtlich der Positionierung und/oder Ausrichtung ermöglicht wird.

Diese Aufgabe wird erfindungsgemäß durch die Merkmale des Verfahrensanspruches 1 sowie durch ein System gemäß dem Anspruch 11 gelöst. Vorteilhafte Weiterbildungen sind Gegenstand der Unteransprüche.

Gemäß dem Anspruch 1 wird ein Verfahren zur Bestimmung der Position einer an einer Überladevorrichtung einer selbstfahrenden Erntemaschine angeordneten Kamera vorgeschlagen. Mittels der Kamera wird ein Zielbereich erfasst, welchem von der Erntemaschine aufgenommenes Erntegut mittels der Überladevorrichtung zugeführt werden soll, wobei am freien Ende der Überladevorrichtung ein Umlenkelement angeordnet ist, zu dem beabstandet die Kamera angeordnet ist. Erfindungsgemäß ist vorgesehen, dass mittels der Kamera zumindest ein Bild des freien Endes der Überladevorrichtung erzeugt wird und dass das von der Kamera erzeugte zumindest eine Bild durch eine Recheneinheit einer Steuerungsvorrichtung der Erntemaschine ausgewertet und anhand der Auswertung die Position der Kamera bezüglich eines Abstands und/oder einer Neigung zum Umlenkelement bestimmt wird. Die Kamera selbst wird als Sensor verwendet, um zu detektieren, ob ihre Position, d.h. der tatsächliche Abstand der Kamera zum Umlenkelement nach der Montage und/oder die eingestellte tatsächliche Neigung der Kamera zum Umlenkelement, korrekt ist. Das Umlenkelement bildet den Referenzpunkt, auf den bezogen die erfolgte Anordnung der Kamera überprüft wird. Auf diese Weise kann ein zuverlässiger Betrieb der Kamera bei der Erkennung des Zielbereiches sowie beim anschließenden Vorgang des Überladens gewährleistet werden. Bevorzugt kann als Kamera eine 3D-Kamera zum Einsatz kommen. Die 3D-Kamera kann beispielsweise eine Stereokamera oder eine TOF-Kamera, eine nach dem Laufzeitverfahren arbeitende Kamera sein. Zur Erzeugung von 3D-Bildern kann auch Lidar, insbesondere Flash-Lidar, zur Anwendung kommen.

Bevorzugt kann das Umlenkelement vor der Erzeugung des zumindest einen Bildes in eine definierte Testposition überführt werden. Dieses Prozedere kann insbesondere bei einer als Feldhäcksler ausgeführten selbstfahrenden Erntemaschine erforderlich sein. Im Unterschied zu einer Überladevorrichtung eines Mähdreschers, welche einen rohrförmigen Abschnitt umfasst, der im Wesentlichen nur um eine vertikale Achse schwenkbar ist und an dessen freien Ende ein als Auslauftülle ausgeführtes Umlenkelement angeordnet ist, weist der Feldhäcksler eine um eine vertikale und eine horizontale Achse schwenkbare Überladevorrichtung auf. Zudem ist das Umlenkelement an der Überladevorrichtung des Feldhäckslers mittels einer ansteuerbaren Vorrichtung um eine horizontal verlaufende Achse schwenkbar, so dass der Abgabewinkel zusätzlich beinflussbar ist. In der Testposition kann das Umlenkelement in Richtung der Erntemaschine eingeschwenkt werden, um sicherzustellen, dass das Umlenkelement bei korrekter Anordnung der Kamera in den optischen Erfassungsbereich der Kamera gelangen würde. Das Überführen in die Testposition kann von der Steuerungsvorrichtung initial durchgeführt werden, beispielsweise bei der Inbetriebnahme der Erntemaschine. Damit kann dem Auftreten einer späteren Fehlfunktion beim Überladen begegnet werden.

Insbesondere kann in einer Speichereinheit der Steuerungsvorrichtung ein Referenzwert für den einzuhaltenden Soll-Abstand hinterlegt werden. Dabei kann der hinterlegte Referenzwert veränderbar sein. Dies kann durch eine Neueingabe des Referenzwertes oder durch eine Anpassung des hinterlegten Wertes durchgeführt werden. Eine Anpassung des Referenzwertes kann beispielsweise dann erforderlich werden, wenn sich Betriebsparameter der Kamera durch einen Austausch der Kamera ändern.

Dabei kann in Abhängigkeit vom Ergebnis der Auswertung ein Signal durch die Steuerungsvorrichtung ausgegeben werden, welches Informationen über die Position der Kamera beinhaltet. Dieses Signal kann von der Steuerungsvorrichtung und/oder zusätzlichen Steuereinheiten verwendet werden.

So kann die durch die Auswertung des zumindest einen Bildes bestimmte Neigung mit einem in der Speichereinheit hinterlegten Referenzwert für eine Soll-Neigung verglichen werden. Auf diese Weise lässt sich feststellen, ob der Montagewinkel der Kamera innerhalb eines Toleranzbereiches um den Referenzwert für die Soll-Neigung liegt oder diesen verlassen hat.

Weiterhin kann der durch die Auswertung des zumindest einen Bildes bestimmte Abstand mit dem in der Speichereinheit der Steuerungsvorrichtung hinterlegten Referenzwert verglichen werden. Durch den Vergleich des bestimmten Abstands mit dem hinterlegten Referenzwert für einen Soll-Abstand kann überprüft und festgestellt werden, ob die Kamera im korrekten Abstand zum Umlenkelement angeordnet ist. Dies ist insbesondere bei einer als Feldhäcksler ausgeführten Erntemaschine erforderlich, da die Überladevorrichtung modular aufgebaut sein kann. Modular aufgebaut heißt in diesem Zusammenhang, dass ein Segment oder mehrere Segmente zwischen einem ersten Abschnitt der Überladevorrichtung, der an der vertikalen Achse angelenkt ist, und einem äußersten Abschnitt, an dem das Umlenkelement angeordnet ist, moniert und demontiert werden können. Dadurch lassen sich unterschiedliche Wurfweiten respektive Überladeweiten darstellen. Mit der variierenden Anzahl an Segmenten können auch die möglichen Befestigungspunkte für die Anordnung der Kamera variieren, was zu einer fehlerhaften Anordnung der Kamera an der Überladevorrichtung führen kann. Dies ist durch das erfindungsgemäße Verfahren vermeidbar.

Bevorzugt kann das Signal zur Ansteuerung eines Aktors verwendet werden, mit dem die Neigung der Kamera relativ zum Umlenkelement eingestellt wird. Die Kamera wird üblicherweise mittels einer Haltevorrichtung an der Überladevorrichtung befestigt. An der Haltevorrichtung ist die Kamera um eine horizontale Achse schwenkbar angeordnet. Das Schwenken der Kamera um die horizontale Achse innerhalb eines begrenzten Winkelbereiches kann mittels des Aktors bewirkt werden. Der Montagewinkel der Kamera relativ zum Umlenkelement, der sich aus der Anordnung der Haltevorrichtung an der Überladevorrichtung ergibt, kann mittels des Aktors innerhalb des begrenzten Winkelbereiches nachjustiert werden. Die Nachjustage kann bevorzugt automatisch erfolgen.

Insbesondere kann das Signal an eine mit der Steuerungsvorrichtung verbundene Ausgabevorrichtung übermittelt werden, welche die Informationen über die Position der Kamera ausgibt. Beispielsweise kann die Ausgabevorrichtung dazu eingerichtet sein, die Überladevorrichtung, das Umlenkelement sowie die Position der Kamera an der Überladevorrichtung zumindest schematisch zu visualisieren.

Weiterhin kann mittels der Auswertung des zumindest einen Bildes das Vorhandensein des Umlenkelementes detektiert werden. Die Detektion des Vorhandenseins des Umlenkelementes dient dazu, die Korrektheit der grundsätzlichen Montageposition der Kamera zu überprüfen. Ergibt die Detektion, dass sich das Umlenkelement außerhalb des optischen Erfassungsbereichs der Kamera befindet, so ist dies ein Indiz dafür, dass die Montageposition fehlerhaft gewählt wurde.

Gemäß einer vorteilhaften Weiterbildung kann bei einem Überschreiten zumindest eines der Referenzwerte eine von der Steuerungsvorrichtung generierte Meldung durch die Ausgabevorrichtung ausgegeben wird. Die Meldung kann insbesondere einen Hinweis auf eine mögliche Ursache enthalten, welche in Abhängigkeit von der Auswertung bestimmt und ausgegeben wird.

So kann eine Meldung "Fehlerhafte Anordnung" als expliziter Warnhinweis ausgegeben werden, wenn die Auswertung des zumindest einen Bildes ergibt, dass das Umlenkelement nicht erkannt wurde und ein Eingriff durch einen Maschinenbediener explizit erforderlich ist.

Eine weitere Meldung "Fehlerhafter Anordnungsabstand" kann als expliziter Warnhinweis ausgegeben werden, wenn die Auswertung des zumindest einen Bildes ergibt, dass der Abstand den Referenzwert für den einzuhaltenden Soll-Abstand über- oder unterschritten wird. Im Unterschied zur Meldung "Fehlerhafte Anordnung" wird dabei das Vorhandensein des Umlenkelementes detektiert, jedoch wird ein Referenzwert für den einzuhaltenden Soll-Abstand über- oder unterschritten. Eine weitere Meldung "Fehlerhafter Anordnungswinkel" kann ausgegeben werden, wenn die Auswertung des zumindest einen Bildes ergibt, dass die bestimmte Neigung vom Referenzwert für die Soll-Neigung abweicht. Dabei kann zusätzlich unterschieden werden, ob die Abweichung der bestimmten Neigung vom Referenzwert für die Soll-Neigung durch eine Nachjustage durch die Ansteuerung des Aktors kompensiert werden kann. Im letzteren Fall könnte die Meldung "Fehlerhafter Anordnungswinkel" lediglich als ein einfacher Hinweis ausgegeben werden, verbunden mit dem Zusatzhinweis, dass die inkorrekte Einstellung der Neigung bei der Montage der Kamera durch die Nachjustage kompensiert werden konnte. Für den Fall, dass die fehlerhafte Neigung nicht kompensiert werden kann, kann die Meldung "Fehlerhafter Anordnungswinkel" als expliziter Warnhinweis ausgegeben werden, der einen Eingriff durch den Maschinenbediener erfordert.

Des Weiteren wird die eingangs gestellte Aufgabe durch ein System zur Bestimmung der Position einer an einer Überladevorrichtung einer selbstfahrenden Erntemaschine angeordneten Kamera gemäß dem Anspruch 11 gelöst.

Gemäß dem Anspruch 11 wird ein System zur Bestimmung der Position einer an einer Überladevorrichtung einer selbstfahrenden Erntemaschine angeordneten Kamera vorgeschlagen, wobei mittels der Kamera ein Zielbereich erfasst wird, welchem von der Erntemaschine aufgenommenes Erntegut mittels der Überladevorrichtung zugeführt werden soll, wobei am freien Ende der Überladevorrichtung ein Umlenkelement angeordnet ist, zu dem beabstandet die Kamera angeordnet ist, wobei die Kamera zur Erzeugung zumindest eines Bildes des freien Endes der Überladevorrichtung eingerichtet ist und dass die Erntemaschine eine Steuerungsvorrichtung mit einer Recheneinheit umfasst, die eingerichtet ist, das von der Kamera erzeugte zumindest eine Bild auszuwerten und anhand der Auswertung die Position der Kamera bezüglich eines Abstands und/oder einer Neigung zum Umlenkelement zu bestimmen. Das erfindungsgemäß System ermöglich eine Überprüfung, ob die Kamera in einer falschen Position angebracht wurde, d.h. unter einem inkorrekten Winkel und/oder in einem inkorrekten Anstand zum Umlenkelement. Das Umlenkelement bildet den Referenzpunkt, auf den bezogen die Anordnung der Kamera überprüft wird. Letzteres ist insbesondere bei modular aufgebauten Überladevorrichtungen an als Feldhäckslern ausgeführten Erntemaschine der Fall.

Insbesondere ist das System zur Durchführung des Verfahrens nach einem der Ansprüche 2 bis 10 eingerichtet. Die aus der Weiterbildung der Unteransprüche 2 bis 10 resultierenden Vorteile gelten entsprechend für das erfindungsgemäße System.

Bevorzugt kann die Kamera als eine 3D-Kamera oder als Lidar ausgeführt sein. Die Ausführung der Kamera als 3D-Kamera, insbesondere als Stereo-Kamera oder TOF-Kamera, oder alternativ als Lidar, insbesondere Flash-Lidar, ist bei der Erfassung des Zielbereichs für dessen Identifizierung und Überwachung ebenso vorteilhaft wie bei der Durchführung des erfindungsgemäßen Verfahrens.

Gemäß einer bevorzugten Weiterbildung kann die Kamera einen Aktor zur Einstellung der Neigung der Kamera relativ zur Überladevorrichtung umfassen, welcher mittels der Steuerungsvorrichtung ansteuerbar ist. Die Kamera kann mittels einer Haltevorrichtung an der Überladevorrichtung an unterschiedlichen Stellen befestigt werden. An der Haltevorrichtung ist die Kamera um eine horizontale Achse schwenkbar angeordnet. Das Schwenken der Kamera um die horizontale Achse innerhalb eines begrenzten Winkelbereiches kann mittels des durch die Steuerungsvorrichtung angesteuerten Aktors bewirkt werden.

Die vorliegende Erfindung wird nachstehend anhand eines in den Zeichnungen dargestellten Ausführungsbeispieles näher erläutert.

Es zeigen:
- Fig. 1: eine schematische Seitenansicht einer selbstfahrenden Erntemaschine;
- Fig. 2: schematisch eine Steuerungsvorrichtung der Erntemaschine gemäß Fig. 1;
- Fig. 3: exemplarisch drei unterschiedliche Heckansichten (A), (B), (C) der Erntemaschine aus der Perspektive einer an einer Überladevorrichtung der Erntemaschine angeordneten Kamera;
- Fig. 4: schematisch mehrere als Auswurfkrümmer ausgeführte, modulartig aufgebaute Überladevorrichtungen unterschiedlicher Länge; und
- Fig. 5: ein vereinfachtes Flussdiagramm des Ablaufs des erfindungsgemäßen Verfahrens.

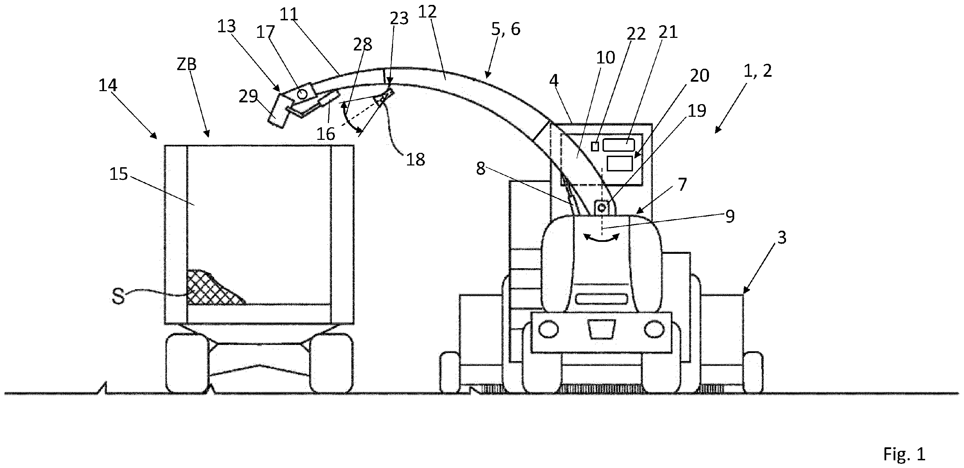

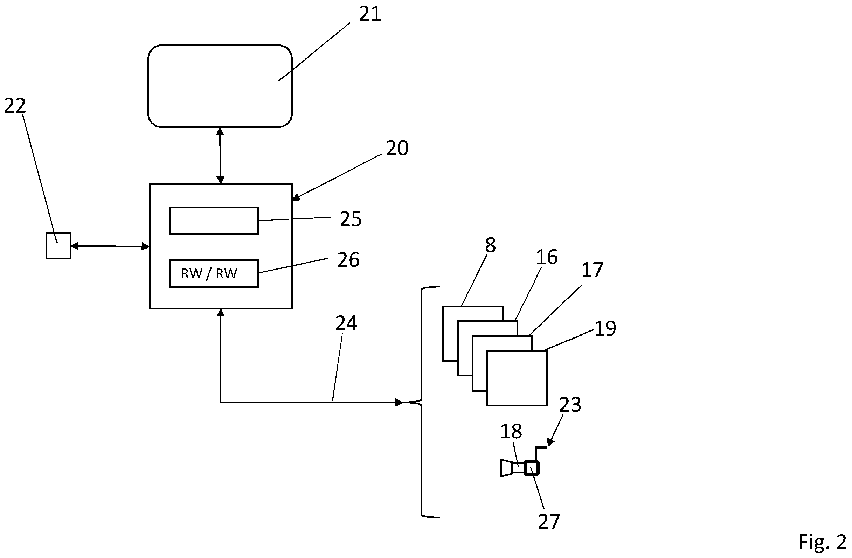

In den Fig. 1 und 2 ist ein System zur Bestimmung der Position einer an einer Überladevorrichtung 5 einer selbstfahrenden Erntemaschine 1 angeordneten Kamera 18 gezeigt.

Fig. 1 zeigt dabei schematisch ein Ausführungsbeispiel einer erfindungsgemäßen landwirtschaftlichen Erntemaschine 1 in Form eines selbstfahrenden Feldhäckslers 2 in schematischer Seitenansicht. Während der Erntefahrt schneidet der Feldhäcksler 2 mittels eines Vorsatzgeräts Pflanzen vom Feld, um das geerntete Pflanzenmaterial über Einzugsorgane einem Häckselaggregat zuzuführen. Dort wird das Erntegut auf für sich bekannte Weise zerkleinert und gelangt in einen Förderschacht, der sich vom Häckselaggregat, das unterhalb einer Fahrerkabine 4 angeordnet ist, mit aufsteigendem Verlauf in einen Bereich hinter der Fahrerkabine 4 erstreckt und in eine Überladeeinrichtung 5 mündet.

Die als Auswurfkrümmer 6 ausgeführte Überladeeinrichtung 5 ist - unter anderem - höhenverschwenkbar gegenüber einem Rahmen 7 des Feldhäckslers 2 gelagert. Ein zwischen Rahmen 7 und Auswurfkrümmer 6 wirkender Hubzylinder 8 dient zur Verstellung der Höhe des Auswurfkrümmers 6. Ein Höhensensor 19, beispielsweise ein Drehpotentiometer, kann den jeweils eingestellten Höhenschwenkwinkel erfassen. Der Auswurfkrümmer 6 ist mittels eines Drehkranzes um eine vertikale Achse 9 drehbar. Der Auswurfkrümmer 6 kann modular aufgebaut sein, wie in der Darstellung in Fig. 1 angedeutet. Modular aufgebaut heißt, dass der Auswurfkrümmer 6 ein Segment 12 oder mehrere Segmente 12 aufweist, die zwischen einem ersten Abschnitt 10 der Überladevorrichtung 5, der an dem Rahmen 7 des Feldhäckslers 2 drehbar angelenkt ist, und einem äußersten Abschnitt 11, an dem endseitig ein Umlenkelement 13 angeordnet ist, angeordnet sein können. Die Segmente 12 können zwischen den ersten Abschnitt 10 und dem äußersten Abschnitt 11 moniert und demontiert werden, um unterschiedliche Überladeweiten, d.h. Abstände zwischen dem Feldhäcksler 2 und einem Ladebehälter 15 eines Transportwagens 14 darstellen zu können. Mit S ist beispielhaft Erntegut bezeichnet, welches bereits in den Ladebehälter 15 überladen wurde.

Am maschinenabgewandten Ende des Auswurfkrümmers 6 ist das klappenförmig ausgeführte Umlenkelement 13 angeordnet, durch dessen Verschwenkbarkeit sich der Auswurfwinkel des Ernteguts aus dem Auswurfkrümmer 6 beeinflussen lässt. Die Verstellung wird durch einen Stellzylinder 16 bewirkt, wobei ein dem Umlenkelement 13 zugeordneter Winkelsensor 17 die Stellung eines endseitigen Klappenelementes 29 des Umlenkelementes 13 erfasst. In Kombination mit dem durch den Höhensensor 19 erfassten Höhenschwenkwinkel des Auswurfkrümmers 6 lässt sich aus der Winkelstellung des Klappenelementes 29 der Auswurfwinkel gegenüber der Horizontalebene errechnen.

Zur optischen Erfassung eines erreichten Auftreffpunkts des im Erntebetrieb ausgeworfenen Ernteguts sowie zur optischen Erfassung der Lage, Form, Abmessung und eines Befüllzustands des Ladebehälters 15 ist an dem Auswurfkrümmer 6 eine auf einen Zielbereich ZB des Auswurfkrümmers 6 ausgerichtete Kamera 18 angebracht. Die Kamera 18 ist vorzugsweise als 3D-Kamera, insbesondere Stereokamera, ausgeführt. Zur Anbringung der Kamera 18 an der Überladevorrichtung 5 ist eine Haltevorrichtung 23 vorgesehen, die schematisch in Fig. 2 näher dargestellt ist.

In der Fahrerkabine 4, welche Platz für einen Maschinenbediener bietet, ist eine Steuerungsvorrichtung 20 angeordnet, bei der es sich um einen digitalen Signalprozessor handelt. Der Steuerungsvorrichtung 20 sind eine optische Ausgabevorrichtung 21 zur Anzeige von Informationen an den Maschinenbediener sowie zumindest ein Bedienelement 22 zugeordnet. Die Steuerungsvorrichtung 20 ist über - aus Übersichtsgründen nicht dargestellte - Signalleitungen 24 mit Aktoren der Überladeeinrichtung 5 wie dem Hubzylinder 8 und dem Stellzylinder 16 und mit Sensoren wie dem Höhensensor 19, dem Winkelsensor 17 und der Kamera 18 verbunden, um diese anzusteuern bzw. Signale von diesen zu empfangen. Für einen Fachmann versteht sich, dass auch andere bzw. ergänzende Aktoren und Sensoren zum Einsatz kommen können.

In Fig. 2 ist schematisch die Steuerungsvorrichtung 20 der Erntemaschine gemäß Fig. 1 dargestellt. Die Steuerungsvorrichtung 20 umfasst eine Recheneinheit 25 sowie eine Speichereinheit 26. Das zumindest eine Bedienelement 22 kann beispielsweise als Eingabevorrichtung, als ein Schalter oder dergleichen ausgeführt sein und dient unter anderem dazu, Daten in die Speichereinheit 26 eingeben zu können und/oder eine Ansteuerung der Aktoren der Überladeeinrichtung 5 zu aktivieren oder zu deaktivieren. Die Haltevorrichtung 23 umfasst einen Aktor 27, mittels dem die Kamera 18 in einem Winkelbereich 28 um ihren Anlenkpunkt an der Haltevorrichtung 23 relativ zum Auswurfkrümmer 6 verschwenkbar ist.

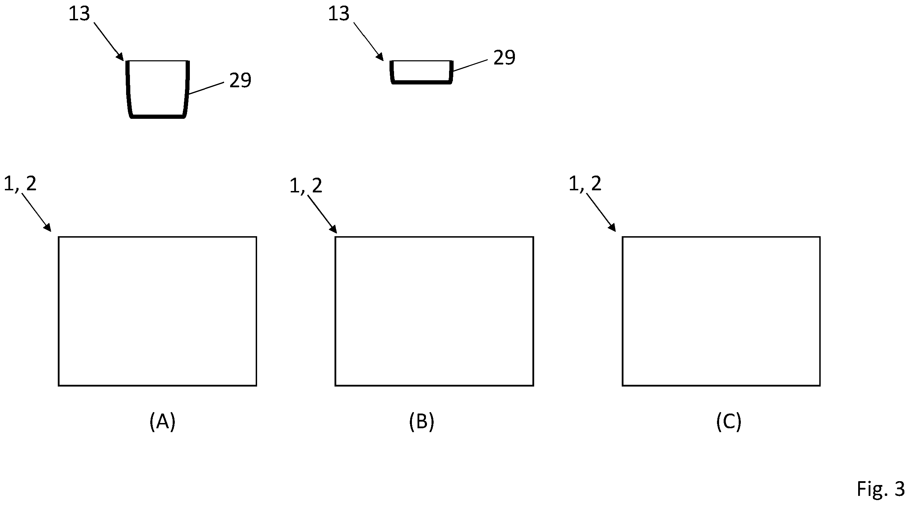

In Fig. 3 sind rein schematisch exemplarisch drei unterschiedliche Heckansichten (A), (B), (C) der Erntemaschine 1 aus der Perspektive der an einer Überladevorrichtung 5, hier dem Auswurfkrümmer 6, der Erntemaschine 1 angeordneten Kamera 18 dargestellt. In Abhängigkeit von der Position der Kamera 18 an dem Auswurfkrümmer 6, d.h. einem Abstand 31 und/oder einer Neigung 32 zum Umlenkelement 13, kann von der Kamera 18 in unterschiedlichen Maß das endseitige Klappenelement 29 des Umlenkelementes 13 optisch erfasst werden. In Ansicht (A) der Fig. 3 wird das Umlenkelement 13 respektive das endseitige Klappenelement 29 nahezu vollständig erfasst. Dies ist ein Indikator dafür, dass die Position der Kamera 18 am Auswurfkrümmer 6 hinsichtlich eines einzuhaltenden Soll-Abstands 31' zwischen der Kamera 18 und dem Umlenkelement 13 sowie einer einzuhaltenden Soll-Neigung 32` der Kamera 18 bezüglich des Umlenkelementes 13 korrekt ist. Diese Position der Kamera 18 gewährleistet eine korrekte Erfassung des Zielbereiches ZB.

In Ansicht (B) der Fig. 3 wird das Umlenkelement 13 respektive das endseitige Klappenelement 29 nur teilweise erfasst. Dies kann ein Indiz für eine nicht korrekt eingestellte Neigung 32 der Kamera 18 bezüglich des Umlenkelementes 13 sein.

In Ansicht (C) der Fig. 3 wird das Umlenkelement 13 nicht von der Kamera 18 erfasst. Zusehen ist lediglich der Heckbereich der Erntemaschine 1 respektive des Feldhäckslers 2. Dies ist ein Indiz für eine inkorrekte Position der Kamera 18 an dem Auswurfkrümmer 6, welche ein zuverlässiges Erfassen des Zielbereiches ZB erschwert oder verhindert.

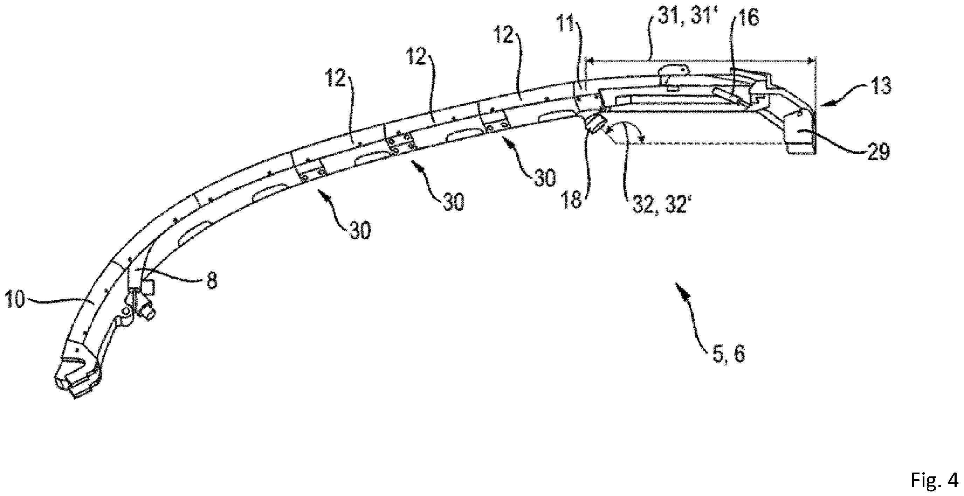

Fig. 4 zeigt schematisch eine Darstellung einer als Auswurfkrümmer 6 ausgeführten, modulartig aufgebauten Überladevorrichtung 5. Der Auswurfkrümmer 6 ist im dargestellten Ausführungsbeispiel durch drei Segmente 12 verlängert. Die Haltevorrichtung 23 kann beispielsweise Halteklammern aufweisen, mittels derer die Haltevorrichtung 23 neben einer Anordnung an dem äußersten Abschnitt 11 auch an beliebigen Stellen 30 eines jeden Segments 12 befestigbar ist. Die Kamera 18 ist mittels der Haltevorrichtung 23 am äußersten Abschnitt 11 des Auswurfkrümmers 6 angeordnet. Abstand 31 und Neigung 32 der Kamera 18 entsprechen dem einzuhaltenden Soll-Abstand 31' bzw. der einzuhaltenden Soll-Neigung 32`. Eine abweichende Anordnung der Kamera 18 an einer der Stellen 30 eines der Segmente 12 führt dazu, dass ein für die korrekte Erfassung des Zielbereiches ZB zwischen der Kamera 18 und dem Umlenkelement 13 einzuhaltender Abstand 31 überschritten wird.

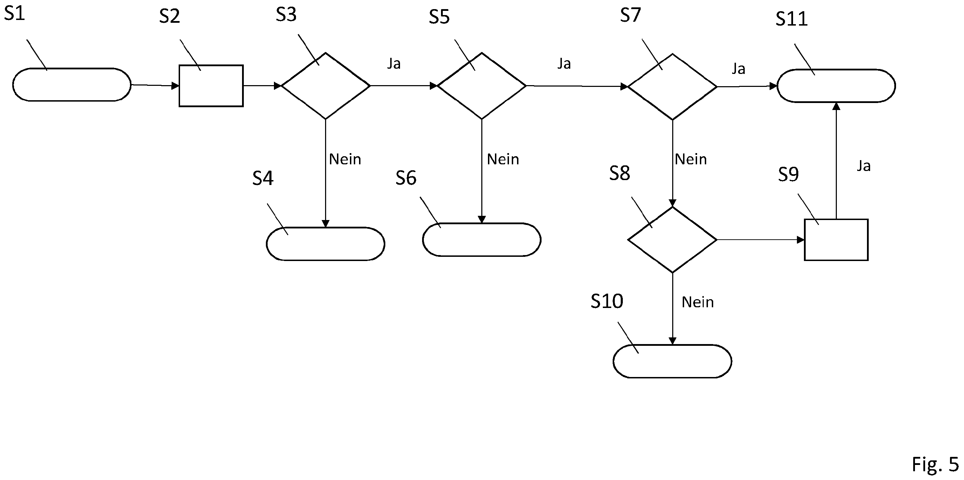

In Fig. 5 ist ein vereinfachtes Flussdiagramm dargestellt, welches die wesentlichen Verfahrensschritte des erfindungsgemäßen Verfahrens wiedergibt, die mittels des erfindungsgemäßen Systems zur Bestimmung der Position der Kamera 18 an der Überladevorrichtung 5 der selbstfahrenden Erntemaschine 1 durchgeführt werden.

Im Schritt S1 wird der Auswurfkrümmer 6 in eine Testposition überführt. Dabei steuert die Steuerungsvorrichtung 20 den Stellzylinder 16 an, um das Umlenkelement 13 in Richtung des Feldhäckslers 2 einzuschwenken. Dadurch kann sichergestellt werden, dass das Umlenkelement 13 bei korrekter Anordnung der Kamera 18 an der Unterseite des Auswurfkrümmers 6 in den optischen Erfassungsbereich der Kamera 18 gelangen würde. Das Überführen des Umlenkelementes 13 in die Testposition kann von der Steuerungsvorrichtung 20 initial durchgeführt werden, beispielsweise bei der Inbetriebnahme des Feldhäckslers 2. Der Vorgang des Überführens in die Testposition kann von dem Maschinenbediener manuell ausgelöst oder von der Steuerungsvorrichtung 20 automatisch ausgeführt werden.

Im Schritt 2 wird mittels der Kamera 18 zumindest ein Bild des freien Endes der Überladevorrichtung 5, hier des endseitig am äußersten Abschnitt 11 angeordneten Klappenelementes 29 des Umlenkelementes 13 erzeugt. Das zumindest eine Bild wird an die Steuerungsvorrichtung 20 zur Auswertung durch die Recheneinheit 25 mittels einer in der Speichereinheit 26 hinterlegten Bildanalysesoftware übertragen. Vorzugsweise kann eine Bildfolge erstellt werden, um etwaige äußere Einflüsse, welche die Aufnahme beeinflussen können, zu kompensieren.

Im Schritt S3 wird anhand der Auswertung des zumindest einen vom freien Ende der Überladevorrichtung 5 erzeugten Bildes überprüft, ob das Umlenkelement 13 bzw. das Klappenelement 29 am freien Ende des Auswurfkrümmers 5 von der Kamera 18 erfasst werden konnten. Bejahendenfalls wird zum nachfolgenden Schritt S5 übergegangen. Wird die Detektion des Umlenkelementes 13 aufgrund der Auswertung negiert, so wird zum Schritt S4 übergegangen.

Im Schritt S4 wird durch die Steuerungsvorrichtung 20 eine Meldung generiert. Die generierte Meldung wird durch die Ausgabevorrichtung 21 ausgegeben. Dabei kann als Meldung der Text "Fehlerhafte Anordnung" als expliziter Warnhinweis ausgegeben werden, wenn die Auswertung des zumindest einen Bildes ergibt, dass das Umlenkelement 13 nicht erkannt wurde. Die Meldung "Fehlerhafte Anordnung" informiert den Maschinenbediener darüber, dass mit der vorliegenden Anordnung der Kamera 18 am Auswurfkrümmer 6 eine Überwachung des Überladebetriebes zumindest eingeschränkt ist. Gegebenenfalls kann der Maschinenbediener zudem auf die daraus resultierenden Einschränkungen beim Betrieb der Kamera 18 hingewiesen werden, welche sich die Genauigkeit der Steuerung eines Überladevorganges auswirken. Nach einer erfolgten Anpassung der Position der Kamera 18 wird das Testprozedere erneut durchlaufen, entweder automatisch ausgelöst oder durch einen erneuten manuellen Aufruf durch den Maschinenbediener.

Wurde im Schritt S3 das Vorhandensein des Umlenkelementes 13 festgestellt, so wird im nachfolgenden Schritt S5 anhand der Auswertung des zumindest einen Bildes die Position der Kamera 18 bezüglich des Abstands 31 zum Umlenkelement 13 bestimmt. Hierzu wird der durch die Auswertung bestimmte Abstand 31 mit einem in der Speichereinheit 26 der Steuerungsvorrichtung 20 hinterlegten Referenzwert RW für einen einzuhaltenden Soll-Abstand 31' verglichen. In Abhängigkeit vom Ergebnis der Auswertung wird ein Signal durch die Steuerungsvorrichtung 20 ausgegeben, welches Informationen über die Position der Kamera 18 beinhaltet. Ergibt der Vergleich des bestimmten Abstands 31 mit dem als Referenzwert RW hinterlegten einzuhaltenden Soll-Abstand 31', dass diese im Wesentlichen übereinstimmen, wird zum nachfolgenden Schritt S7 übergegangen. Das im Wesentlichen Übereinstimmen von bestimmten Abstand 31 und Soll-Abstand 31' wird durch die Vorgabe eines in der Speichereinheit 26 hinterlegten Toleranzbereiches festgelegt. Weicht der bestimmte Abstand 31 von dem Soll-Abstand 31' signifikant ab, d.h. wird der Toleranzbereich verlassen, so wird zum Schritt S6 übergegangen.

Im Schritt S6 wird durch die Steuerungsvorrichtung 20 eine bezüglich der festgestellten Abweichung des bestimmten Abstand 31 von dem Soll-Abstand 31' spezifische Meldung generiert und durch die Ausgabevorrichtung 21 ausgegeben. Dabei kann als Meldung der Text "Fehlerhafter Anordnungsabstand" als expliziter Warnhinweis ausgegeben werden, wenn die Auswertung des zumindest einen Bildes ergibt, dass der Soll-Abstand 31' des Umlenkelementes 13 nicht eingehalten wird. In Abhängigkeit vom Ergebnis der Auswertung kann von der Steuerungsvorrichtung 20 ein Signal ausgegeben werden, welches Informationen über den bestimmten Abstand 31 der Kamera 18 zum Umlenkelement 13 beinhaltet. Dieses Signal kann auf der Ausgabevorrichtung 21 zur Anzeige gebracht werden. Dabei kann der bestimmten Abstand 31 als absoluter Zahlenwert angezeigt und/oder durch eine Darstellung des Auswurfkrümmers 6 und die bestimmte aktuelle Position und die Soll-Position der Kamera 18 visualisiert werden. Damit kann der Maschinenbediener darüber informiert werden, in welcher Weise eine Anpassung der Anordnung der Kamera 18 hinsichtlich ihres Abstands 31 zum Umlenkelement 13 erforderlich ist.

Nach einer erfolgten Anpassung des Abstands 31 kann das Testprozedere erneut, insbesondere durch manuellen Aufruf durch den Maschinenbediener, gestartet werden.

Wurde im Schritt S5 festgestellt, dass der bestimmte Abstand 31 und der Soll-Abstand 31' um Wesentlichen übereinstimmen, so wird im nachfolgenden Schritt S7 anhand der Auswertung die Neigung 32 der Kamera 18 bestimmt. Hierzu wird im Schritt S7 die durch die Auswertung des zumindest einen Bildes bestimmte Neigung 32 der Kamera 18 mit einem in der Speichereinheit 26 der Steuerungsvorrichtung 20 hinterlegten Referenzwert RW für eine einzuhaltende Soll-Neigung 32' verglichen. In Abhängigkeit vom Ergebnis der Auswertung wird ein Signal durch die Steuerungsvorrichtung 20 ausgegeben, welches Informationen über die bestimmte Neigung 32 der Kamera 18 beinhaltet. Ergibt der Vergleich der bestimmten Neigung 32 mit der als Referenzwert RW hinterlegten einzuhaltenden Soll-Neigung 32`, dass diese im Wesentlichen übereinstimmen, wird zum nachfolgenden Schritt S11 übergegangen. Im Wesentlichen übereinstimmen bedeutet, dass die bestimmte Neigung 32 innerhalb eines gleichfalls vorgegebenen und in der Speichereinheit 26 hinterlegten Toleranzbereiches für den Soll-Abstand 32' liegt. Weicht die bestimmte Neigung 32 der Kamera 18 von der Soll-Neigung 32' signifikant ab, d.h. wird der für die Neigung hinterlegte Toleranzbereich verlassen, so wird zum Schritt S8 übergegangen.

Im Schritt S8 wird überprüft, ob die Abweichung der bestimmten Neigung 32 vom Referenzwert RW für die Soll-Neigung 32' durch eine Nachjustage der Kamera 18 durch die Ansteuerung des Aktors 27 kompensiert werden kann. Wird im Schritt S8 festgestellt, dass eine Nachjustage der Neigung 32 unter Ausschöpfung des Winkelbereiches 28 bis zum Erreichen der Soll-Neigung 32 möglich ist, wird zum Schritt S9 übergegangen. Zudem kann in diesem Fall auf der Ausgabevorrichtung 21 eine Meldung "Fehlerhafter Anordnungswinkel" lediglich als ein einfacher Hinweis ausgegeben werden, verbunden mit dem Zusatzhinweis, dass die inkorrekte Einstellung der Neigung bei der Montage der Kamera 18 durch die Nachjustage kompensiert werden konnte.

Ergibt die Überprüfung im Schritt S8, dass eine Nachjustage der aktuell bestimmten Neigung 32 der Kamera 18 durch die Ansteuerung des Aktors 27 nicht möglich ist, so wird zum Schritt S10 übergegangen.

Im Schritt S10 wird als Meldung "Fehlerhafter Anordnungswinkel" auf der Ausgabevorrichtung 21 ausgegeben, wenn die Auswertung des zumindest einen Bildes ergibt, dass die bestimmte Neigung 32 vom Referenzwert RW abweicht und auch nicht nachjustiert werden kann. Dabei kann die bestimmte Neigung 32 als absoluter Zahlenwert angezeigt und/oder durch eine Darstellung des Auswurfkrümmers 6 und die bestimmte aktuelle Neigung 32 und die Soll-Neigung 32` der Kamera 18 visualisiert werden. Damit kann der Maschinenbediener darüber informiert werden, in welcher Weise eine Anpassung der Anordnung der Kamera 18 hinsichtlich ihrer Neigung 32 zum Umlenkelement 13 erforderlich ist. Auch in diesem Fall kann nach einer erfolgten Anpassung der Neigung 32 das Testprozedere erneut durch einen manuellen Aufruf durch den Maschinenbediener gestartet werden.

Im Schritt S9 wird das von der Steuerungsvorrichtung 20 generierte Signal für die bestimmte Neigung 32 zur Ansteuerung des Aktors 27 verwendet, mit dem die Neigung 32 der Kamera 18 relativ zu dem Umlenkelement 13 eingestellt wird, um die Abweichung von der Soll-Neigung 32' auszugleichen. Nach der Durchführung der Anpassung der bestimmten Neigung 32 an die Soll-Neigung 32' wird zum Schritt S11 übergegangen.

Im Schritt S11 wird eine Meldung auf der Ausgabevorrichtung 21 ausgegeben, wonach die Position der Kamera 18, d.h. der Abstand 31 und/oder die Neigung 32 bezogen auf das Umlenkelement 13 korrekt sind.

**Bezugszeichenliste**

| | | | |
|---|---|---|---|
| 1 | Erntemaschine | 32' | Soll-Neigung |
| 2 | Feldhäcksler | RW | Referenzwert |
| 3 | Vorsatzgerät | ZB | Zielbereich |
| 4 | Fahrerkabine | S1 | Schritt |
| 5 | Überladevorrichtung | S2 | Schritt |
| 6 | Auswurfkrümmer | S3 | Schritt |
| 7 | Rahmen | S4 | Schritt |
| 8 | Hubzylinder | S5 | Schritt |
| 9 | Vertikale Achse | S6 | Schritt |
| 10 | Erster Abschnitt von 6 | S7 | Schritt |
| 11 | Äußerster Abschnitt von 6 | S8 | Schritt |
| 12 | Segment | S9 | Schritt |
| 13 | Umlenkelement | S10 | Schritt |
| 14 | Transportwagen | S11 | Schritt |
| 15 | Ladebehälter | | |
| 16 | Stellzylinder | | |
| 17 | Winkelsensor | | |
| 18 | Kamera | | |
| 19 | Höhensensor | | |
| 20 | Steuerungsvorrichtung | | |
| 21 | Ausgabevorrichtung | | |
| 22 | Bedienelement | | |
| 23 | Haltevorrichtung | | |
| 24 | Signalleitung | | |
| 25 | Recheneinheit | | |
| 26 | Speichereinheit | | |
| 27 | Aktor | | |
| 28 | Winkelbereich | | |
| 29 | Klappenelement | | |
| 30 | Stelle | | |
| 31 | Abstand | | |
| 31' | Soll-Abstand | | |
| 32 | Neigung | | |

## Patentansprüche

1. Verfahren zur Bestimmung der Position einer an einer Überladevorrichtung (5,6) einer selbstfahrenden Erntemaschine (1, 2) angeordneten Kamera (18), mittels der ein Zielbereich (ZB) erfasst wird, welchem von der Erntemaschine (1, 2) aufgenommenes Erntegut (S) mittels der Überladevorrichtung (5, 6) zugeführt werden soll, wobei am freien Ende der Überladevorrichtung (5, 6) ein Umlenkelement (13) angeordnet ist, zu dem beabstandet die Kamera (18) angeordnet ist, **dadurch gekennzeichnet, dass** mittels der Kamera (18) zumindest ein Bild des freien Endes der Überladevorrichtung (5, 6) erzeugt wird, und dass das von der Kamera (18) erzeugte zumindest eine Bild durch eine Recheneinheit (25) einer Steuerungsvorrichtung (20) der Erntemaschine (1, 2) ausgewertet und anhand der Auswertung die Position der Kamera (18) bezüglich eines Abstands (31) und/oder einer Neigung (32) zum Umlenkelement (13) bestimmt wird.

2. Verfahren nach Anspruch 1, **dadurch gekennzeichnet, dass** das Umlenkelement (13) vor der Erzeugung des zumindest einen Bildes in eine definierte Testposition überführt wird.

3. Verfahren nach Anspruch 1 oder 2, **dadurch gekennzeichnet, dass** in einer Speichereinheit (26) der Steuerungsvorrichtung (20) ein Referenzwert (RW) für einen einzuhaltenden Soll-Abstand (31') hinterlegt wird.

4. Verfahren nach einem der Ansprüche 1 bis 3, **dadurch gekennzeichnet, dass** in Abhängigkeit vom Ergebnis der Auswertung ein Signal durch die Steuerungsvorrichtung (20) ausgegeben wird, welches Informationen über die Position der Kamera (18) beinhaltet.

5. Verfahren nach einem der Ansprüche 1 bis 4, **dadurch gekennzeichnet, dass** die durch die Auswertung des zumindest einen Bildes bestimmte Neigung (32) mit einer in der Speichereinheit (26) hinterlegten Referenzwert (RW) für eine Soll-Neigung (32') verglichen wird.

6. Verfahren nach Anspruch 3 bis 5, **dadurch gekennzeichnet, dass** der durch die Auswertung des zumindest einen Bildes bestimmte Abstand (31) mit dem in der Speichereinheit (26) der Steuerungsvorrichtung (20) hinterlegten Referenzwert (RW) verglichen wird.

7. Verfahren nach Anspruch 4 bis 6, **dadurch gekennzeichnet, dass** das Signal zur Ansteuerung eines Aktors (27) verwendet wird, mit dem die Neigung (32) der Kamera (18) relativ zum Umlenkelement (13) eingestellt wird.

8. Verfahren nach einem der Ansprüche 4 bis 7, **dadurch gekennzeichnet, dass** das Signal an eine mit der Steuerungsvorrichtung (20) verbundene Ausgabevorrichtung (21) übermittelt wird, welche die Informationen über die Position der Kamera (18) ausgibt.

9. Verfahren nach einem der vorangehenden Ansprüche, **dadurch gekennzeichnet, dass** mittels der Auswertung des zumindest einen Bildes das Vorhandensein des Umlenkelementes (13) detektiert wird.

10. Verfahren nach einem der Ansprüche 8 oder 9, **dadurch gekennzeichnet, dass** bei einem Überschreiten zumindest eines der Referenzwerte (RW) eine von der Steuerungsvorrichtung (20) generierte Meldung durch die Ausgabevorrichtung (21) ausgegeben wird.

11. System zur Bestimmung der Position einer an einer Überladevorrichtung (5, 6) einer selbstfahrenden Erntemaschine (1) angeordneten Kamera (18), mittels der ein Zielbereich (ZB) erfasst wird, welchem von der Erntemaschine (1, 2) aufgenommenes Erntegut (S) mittels der Überladevorrichtung (5, 6) zugeführt werden soll, wobei am freien Ende der Überladevorrichtung (5, 6) ein Umlenkelement (13) angeordnet ist, zu dem beabstandet die Kamera (18) angeordnet ist, **dadurch gekennzeichnet, dass** die Kamera (18) zur Erzeugung zumindest eines Bildes des freien Endes der Überladevorrichtung (5, 6) eingerichtet ist, und dass die Erntemaschine (1, 2) eine Steuerungsvorrichtung (20) mit einer Recheneinheit (25) umfasst, die eingerichtet ist, das von der Kamera (18) erzeugte zumindest eine Bild auszuwerten und anhand der Auswertung die Position der Kamera (18) bezüglich eines Abstands (31) und/oder einer Neigung (32) zum Umlenkelement (13) zu bestimmen.

12. System nach Anspruch 11, **dadurch gekennzeichnet, dass** das System zur Durchführung des Verfahrens nach einem der Ansprüche 2 bis 10 eingerichtet ist.

13. System nach Anspruch 11 oder 12, **dadurch gekennzeichnet, dass** die Kamera (18) als eine 3D-Kamera oder Lidar ausgeführt ist.

14. System nach einem der Ansprüche 11 bis 13, **dadurch gekennzeichnet, dass** die Kamera (18) einen Aktor (27) zur Einstellung der Neigung (32) der Kamera (18) relativ zur Überladevorrichtung (5, 6) umfasst, welcher mittels der Steuerungsvorrichtung (20) ansteuerbar ist.

## Claims

1. A method for determining the position of a camera (18) disposed on an overhead transfer device (5, 6) of a self-propelled harvesting machine (1, 2), by means of which a target region (ZB) is captured to which harvested material (S) picked up by the harvesting machine (1, 2) is intended to be fed by means of the overhead transfer device (5, 6), wherein a deflecting element (13) is disposed at the free end of the overhead transfer device (5, 6) and the camera (18) is disposed at a distance to the deflecting element, **characterized in that** at least one image of the free end of the overhead transfer device (5, 6) is produced by means of the camera (18), and **in that** the at least one image produced by the camera (18) is evaluated by means of a processing unit (25) of a control device (20) of the harvesting machine (1, 2) and with the aid of the evaluation, the position of the camera (18) in respect of a distance (31) and/or an inclination (32) to the deflecting element (13) is determined.

2. The method according to claim 1, **characterized in that** the deflecting element (13) is transferred into a specified test position prior to the production of the at least one image.

3. The method according to claim 1 or claim 2, **characterized in that** a reference value (RW) for a nominal distance (31') which is to be complied with is stored in a storage unit (26) of the control device (20).

4. The method according to one of claims 1 to 3, **characterized in that** a signal is output by the control device (20) which is a function of the result of the evaluation and which contains information regarding the position of the camera (18) is output by the control device (20).

5. The method according to one of claims 1 to 4, **characterized in that** the inclination (32) determined by means of the evaluation of the at least one image is compared with a reference value (RW) for a nominal inclination (32') which is stored in the storage unit (26).

6. The method according to claim 3 to 5, **characterized in that** the distance (31) determined by the evaluation of the at least one image is compared with the reference value (RW) which is stored in the storage unit (26) of the control device (20).

7. The method according to claim 4 to 6, **characterized in that** the signal is used to control an actuator (27) with which the inclination (32) of the camera (18) relative to the deflecting element (13) is adjusted.

8. The method according to one of claims 4 to 7, **characterized in that** the signal is transmitted to an output device (21) which is connected to the control device (20) and which outputs the information regarding the position of the camera (18).

9. The method according to one of the preceding claims, **characterized in that** the presence of the deflecting element (13) is detected by means of the evaluation of the at least one image.

10. The method according to one of claims 8 or 9, **characterized in that** in the case in which at least one of the reference values (RW) is exceeded, a message generated by the control device (20) is output via the output device (21).

11. A system for the determination of the position of a camera (18) disposed on an overhead transfer device (5, 6) of a self-propelled harvesting machine (1), by means of which a target region (ZB) is captured to which harvested material (S) picked up by the harvesting machine (1, 2) is intended to be fed by means of the overhead transfer device (5, 6), wherein a deflecting element (13) is disposed at the free end of the overhead transfer device (5, 6) and the camera (18) is disposed at a distance to the deflecting element, **characterized in that** the camera (18) is configured to produce at least one image of the free end of the overhead transfer device (5, 6), and **in that** the harvesting machine (1, 2) comprises a control device (20) with a processing unit (25) which is configured to evaluate the at least one image produced by the camera and, with the aid of the evaluation, to determine the position of the camera (18) in respect of a distance (31) and/or an inclination (32) to the deflecting element (13).

12. The system according to claim 11, **characterized in that** the system is configured for carrying out the method according to one of claims 2 to 10.

13. The system according to claim 11 or claim 12, **characterized in that** the camera (18) is configured as a 3D camera or LIDAR camera.

14. The system according to one of claims 11 to 13, **characterized in that** the camera (18) comprises an actuator (27) for adjusting the inclination (32) of the camera (18) relative to the overhead transfer device (5, 6) and which can be controlled by means of the control device (20).

## Revendications

1. Procédé de détermination de la position d'une caméra (18) qui est disposée sur un dispositif de transfert (5, 6) d'une machine de récolte automotrice (1, 2) et au moyen de laquelle est couverte une zone cible (ZB) vers laquelle du produit récolté (S) ramassé par la machine de récolte (1, 2) doit être dirigé au moyen du dispositif de transfert (5, 6), à l'extrémité libre du dispositif de transfert (5, 6) étant disposé un élément d'articulation (13) à distance duquel est disposée la caméra (18), **caractérisé en ce qu'**au moins une image de l'extrémité libre du dispositif de transfert (5, 6) est générée au moyen de la caméra (18), et **en ce que** la au moins une image générée par la caméra (18) est analysée par l'intermédiaire d'une unité de calcul (25) d'un dispositif de commande (20) de la machine de récolte (1, 2) et, à l'aide de l'analyse, la position de la caméra (18) est déterminée relativement à une distance (31) et/ou à une inclinaison (32) par rapport à l'élément d'articulation (13).

2. Procédé selon la revendication 1, **caractérisé en ce que**, avant la génération de la au moins une image, l'élément d'articulation (13) est transféré dans une position de test définie.

3. Procédé selon la revendication 1 ou 2, **caractérisé en ce que** dans une unité de mémoire (26) du dispositif de commande (20) est enregistrée une valeur de référence (RW) pour une distance de consigne (31') à respecter.

4. Procédé selon une des revendications 1 à 3, **caractérisé en ce qu'**en fonction du résultat de l'analyse est émis, par l'intermédiaire du dispositif de commande (20), un signal qui contient des informations sur la position de la caméra (18).

5. Procédé selon une des revendications 1 à 4, **caractérisé en ce que** l'inclinaison (32) déterminée par l'intermédiaire de l'analyse de la au moins une image est comparée à une valeur de référence (RW) pour une inclinaison de consigne (32') enregistrée dans l'unité de mémoire (26).

6. Procédé selon la revendication 3 à 5, **caractérisé en ce que** la distance (31) déterminée par l'intermédiaire de l'analyse de la au moins une image est comparée à la valeur de référence (RW) enregistrée dans l'unité de mémoire (26) du dispositif de commande (20).

7. Procédé selon la revendication 4 ou 6, **caractérisé en ce que** le signal est utilisé pour commander un actionneur (27) avec lequel est réglée l'inclinaison (32) de la caméra (18) par rapport à l'élément d'articulation (13).

8. Procédé selon une des revendications 4 à 7, **caractérisé en ce que** le signal est transmis à un dispositif d'émission (21) qui est relié au dispositif de commande (20) et qui émet les informations sur la position de la caméra (18).

9. Procédé selon une des revendications précédentes, **caractérisé en ce qu'**au moyen de l'analyse de la au moins une image est détectée la présence de l'élément d'articulation (13).

10. Procédé selon une des revendications 8 ou 9, **caractérisé en ce qu'**en cas de surpassement au moins d'une des valeurs de référence (RW) est émis par le dispositif d'émission (21) un message généré par le dispositif de commande (20).

11. Système de détermination de la position d'une caméra (18) qui est disposée sur un dispositif de transfert (5, 6) d'une machine de récolte automotrice (1) et au moyen de laquelle est couverte une zone cible (ZB) vers laquelle du produit récolté (S) ramassé par la machine de récolte (1, 2) doit être dirigé au moyen du dispositif de transfert (5, 6), à l'extrémité libre du dispositif de transfert (5, 6) étant disposé un élément d'articulation (13) à distance duquel est disposée la caméra (18), **caractérisé en ce que** la caméra (18) est agencée pour générer au moins une image de l'extrémité libre du dispositif de transfert (5, 6), et **en ce que** la machine de récolte (1, 2) inclut un dispositif de commande (20) avec une unité de calcul (25) qui est agencée pour analyser la au moins une image générée par la caméra (18) et, à l'aide de l'analyse, pour déterminer la position de la caméra (18) relativement à une distance (31) et/ou à une inclinaison (32) par rapport à l'élément d'articulation (13).

12. Système selon la revendication 11, **caractérisé en ce que** le système est agencé pour exécuter le procédé selon une des revendications 2 à 10.

13. Système selon la revendication 11 ou 12, **caractérisé en ce que** la caméra (18) est conformée en caméra 3D ou en lidar.

14. Système selon une des revendications 11 à 13, **caractérisé en ce que**, pour régler l'inclinaison (32) de la caméra (18) par rapport au dispositif de transfert (5, 6), la caméra (18) inclut un actionneur (27) qui est commandable par l'intermédiaire du dispositif de commande (20).
